# EUROPÄISCHE PATENTANMELDUNG

(11) **EP 4 825 549 A1**
(43) Veröffentlichungstag der Anmeldung: **21.10.2026**
(21) Anmeldenummer: 25171001.8
(22) Anmeldetag: 16.04.2025
(51) Int. Cl.: B27F 1/02, B27M 1/08, B23Q 15/12, B27B 1/00

(54) **VERFAHREN UND ANLAGE ZUR VERARBEITUNG EINES BAUMSTAMMS ZU SCHNITTHOLZ**

(71) Anmelder: Gebrüder Linck, Maschinenfabrik "Gatterlinck" GmbH & Co. KG, 77704 Oberkirch (DE)
(72) Erfinder: Rendler, Martin, 77794 Lautenbach (DE); Seger, Lothar, 79241 Ihringen (DE); Burger, Raphael, 77654 Offenburg (DE); Rathke, Jörn, 77704 Oberkirch (DE)
(74) Vertreter: LBP Lemcke, Brommer & Partner Patentanwälte mbB

(57) **Zusammenfassung**

Verfahren zur Verarbeitung mindestens eines Baumstamms (1) zu Schnittholz, bei dem
der Baumstamm (1) oder ein daraus erzeugtes Werkstück (1) mittels mindestens einer, insbesondere mehrerer Bearbeitungsmaschinen, spanend bearbeitet wird und dafür mittels mindestens eines Fördermittels eine Relativbewegung des Baumstamms (1) oder des daraus erzeugten Werkstücks (1) gegenüber mindestens einem Werkzeug der Bearbeitungsmaschine erzeugt wird, wobei
vor der spanenden Bearbeitung mindestens eine Abmessung und/oder Geometrie des Baumstammes (1) oder des daraus erzeugten Werkstücks ermittelt wird und für mindestens eine der Bearbeitungsmaschinen zumindest ein leistungsabhängiger Bearbeitungsparameter, insbesondere ein Moment (M1, M2, M3, M4) und/oder eine Drehzahl (n1, n2, n3, n4) eines rotierenden Werkzeugs (5, 6) der Bearbeitungsmaschine, und/oder eine Geschwindigkeit (v1, v2, v3) der Relativbewegung in Abhängigkeit der ermittelten Abmessung und/oder Geometrie individuell eingestellt werden.

## Beschreibung

Die Erfindung betrifft ein Verfahren und eine Anlage zur Verarbeitung eines Baumstammes zu Schnittholz.

Bei der Verarbeitung eines Baumstammes zu Schnittholz wird der Baumstamm üblicherweise entlang einer Vorschubrichtung, die im Wesentlichen parallel zu seiner Stammachse gerichtet ist, gegen mehrere Trennwerkzeuge bewegt. Bei den Trennwerkzeugen handelt kann es sich um rotierende Spanerwerkzeuge handeln, mittels derer der Baumstamm mit ebenen Seitenflächen versehen wird. Anschließend wird der Baumstamm üblicherweise im Bereich der Waldkanten bearbeitet, beispielsweise mittels mehrerer Profilerwerkzeuge, indem die noch verbliebenen Waldkantenbereiche entfernt werden. In der Variante einer Profilierlinie werden die zu gewinnenden Haupt- und Seitenwarebretter zusammenhängend und noch am Baumstamm profiliert. Durch anschließende Ritz- und Sägeschnitte, die typischerweise mittels rotierender Sägeblätter erfolgen, können die genannten Seiten- und Hauptwarebretter bedarfsweise unterteilt und sowohl vom Baumstamm als auch voneinander getrennt werden. Alternativ besteht auch die Möglichkeit, die Bretter ohne vorheriges Entfernen des Waldkantenbereichs vom Stamm zu trennen und erst anschließend einer Besäumkreissäge zuzuführen, um die Waldkanten zu entfernen.

Für eine Schnittbewegung der Werkzeuge, insbesondere eine Rotation, wird üblicherweise eine erforderliche Aggregatleistung einer Bearbeitungsmaschine ermittelt und für die Bearbeitung des Baumstamms fest eingestellt. Darüber hinaus wird bei der Vorschubbewegung mehrere Baumstämme zur Erreichung erforderlicher Taktzeiten üblicherweise eine konstante Vorschubgeschwindigkeit eingestellt, mit der die Baumstämme durch die Bearbeitungsmaschinen gefördert werden. Ein Nachteil einer derartigen Einstellung von Aggregatleistung und Vorschubgeschwindigkeit besteht in der ungleichmäßigen Belastung der Werkzeuge und der Maschine. Dadurch kann es zu Schwankungen in der Schnittqualität kommen und zur Verringerung der Lebensdauer von Anlagenteilen, insbesondere von Werkzeugen.

Es ist die Aufgabe der Erfindung, Mittel bereitzustellen, mit denen eine verbesserte Stammbearbeitung möglich ist. Die Aufgabe wird gelöst durch ein Verfahren nach Anspruch 1 sowie eine Anlage nach Anspruch 11. Vorteilhafte Weiterbildungen sind Gegenstände abhängiger Ansprüche.

Bei dem erfindungsgemäßen Verfahren wird ein Baumstamm oder ein daraus erzeugtes Werkstück mittels zumindest einer Bearbeitungsmaschine spanend bearbeitet. Dafür wird mittels mindestens eines Fördermittels eine Relativbewegung des Baumstammes oder daraus erzeugten Werkstückes gegenüber mindestens einem Werkzeug der Bearbeitungsmaschine erzeugt. Vor der spanenden Bearbeitung wird mindestens eine Abmessung und/oder Geometrie des Baumstammes oder des daraus erzeugten Werkstücks ermittelt. Für mindestens eine der Bearbeitungsmaschinen wird zumindest ein leistungsabhängiger Bearbeitungsparameter, insbesondere ein Moment und/oder eine Drehzahl eines rotierenden Werkzeugs der Bearbeitungsmaschine, in Abhängigkeit der ermittelten Abmessung und/oder Geometrie und/oder einer davon abhängigen Größe individuell und insbesondere automatisiert eingestellt. Zusätzlich oder alternativ kann zur individuellen Einstellung des leistungsabhängigen Bearbeitungsparameters auch eine Geschwindigkeit der Relativbewegung individuell und insbesondere automatisiert eingestellt werden.

Die individuelle Einstellung des leistungsabhängigen Bearbeitungsparameters und/oder der Geschwindigkeit ermöglicht es, die Nachteile einer fest eingestellten Aggregatleistung und Vorschubgeschwindigkeit bei der Bearbeitung von Baumstämmen zu beheben, indem stammindividuelle Eigenschaften berücksichtigt werden, die bei der spanenden Bearbeitung des jeweiligen Stammes zu einer besseren Schnittqualität und längeren Standzeiten der eingesetzten Werkzeuge führen. Dies stellt eine Abkehr von gängigen Prinzipien bei der Verarbeitung von Baumstämmen dar, da diese zur Sicherstellung eines robusten Anlagenbetriebs und der Einhaltung vorgegebener Taktzeiten mit konstanten Geschwindigkeiten und Aggregatsleistungen bearbeitet werden. Eine individuelle Einstellung kann im Rahmen der Erfindung als eine stammabhängige Konfiguration der betreffenden Größen betrachtet werden. Es liegt im Rahmen der Erfindung, dass der leistungsabhängige Bearbeitungsparameter einer Aggregatleistung und/oder einem Moment und/oder einer Drehzahl entsprechen kann, mit dem das betreffende Werkzeug angetrieben wird. Es ist auch denkbar, dass die Aggregatleistung im Wesentlichen konstant bleibt und das Moment und die Drehzahl, deren Produkt der Aggregatleistung entspricht, eingestellt werden. Insbesondere umfasst die individuelle Einstellung des leistungsabhängiger Bearbeitungsparameters und/oder der Fördergeschwindigkeit eine Veränderung der genannten Größen zwischen der Bearbeitung zweier Baumstämme oder daraus erzeugter Werkstücke, insbesondere eine Erhöhung oder eine Verringerung.

Erfindungsgemäß ist es grundsätzlich unerheblich, welche Art der Relativbewegung zwischen dem Baumstamm oder dem Werkzeug eingestellt wird. Insofern ist es denkbar, dass der Baumstamm und das Werkzeug jeweils einzeln oder gemeinsam, insbesondere gleich- oder gegenläufig bewegt werden können, um die Relativbewegung einzustellen. Die Geschwindigkeit der Relativbewegung kann sich bei gemeinsamer Bewegung des Baumstammes oder daraus erzeugten Werkstücks und des Werkzeugs insbesondere in Abhängigkeit der jeweiligen Geschwindigkeiten entlang einer gemeinsamen Bezugsachse ergeben. Ebenso kann der Baumstamm oder das daraus erzeugte Werkstück mittels des Fördermittels mit einer Fördergeschwindigkeit in einer Förderrichtung durch die Bearbeitungsmaschine hindurchgefördert und dabei mittels des Werkzeugs spanend bearbeitet werden. Hierbei kann das Werkzeug zumindest in Bezug auf die Förderachse des Baumstammes ortsfest angeordnet sein, sodass die Geschwindigkeit der Relativbewegung der Fördergeschwindigkeit des Baumstammes oder draus erzeugten Werkstücks entspricht. Insbesondere ist die Fördergeschwindigkeit in diesem Fall als unabhängig von einer Schnittbewegung des betreffenden Bearbeitungswerkzeugs, insbesondere einem Tangentialanteil bei einer Rotation des Bearbeitungswerkzeugs, zu betrachten.

Die Erfindung beruht auf der Erkenntnis, dass bei der trennenden Bearbeitung von Holz die spezifische Schnittkraft, Schnitttiefe, Schnittbreite sowie Werkzeuggeometrie, besonders der Werkzeugdurchmesser eines rotierenden Werkzeugs in Abhängigkeit davon gewählt werden, mit welchem Profil ein zu bearbeitender Baumstamm versehen werden soll. Dies hängt wiederum davon ab, welche maximale Holzausbeute erzielbar ist, was wiederum von der Gestalt des Baumstammes abhängt, die infolge des natürlichen Wuchses von Stamm zu Stamm unterschiedlich sein kann. Von den genannten Faktoren legen insbesondere die Schnitttiefe und Schnittbreite fest, welches Holzvolumen vom Baumstamm oder daraus erzeugten Werkstück spanend abgetragen wird und damit auch, welche Leistung erforderlich ist, um den Baumstamm in der gewünschten Weise zu bearbeiten. Durch Erfassung der Abmessung und/oder Geometrie des Baumstammes oder eines daraus erzeugten Werkstücks ist es damit bereits zu einem frühen Stadium der Stammbearbeitung möglich, zu bestimmen, mit welchen Schnitttiefen und Schnittbreiten der Baumstamm voraussichtlich bearbeitet werden muss, um ein gewünschtes Profil am Stamm zu erzeugen und welcher leistungsabhängige Bearbeitungsparameters und/oder Fördergeschwindigkeit optimalerweise eingestellt werden sollte. In anderen Worten ist es durch eine bedarfsgerechte Einstellung mindestens eines leistungsabhängigen Bearbeitungsparameters und/oder der Fördergeschwindigkeit möglich, in Abhängigkeit einer ermittelten Gestalt des Baumstammes die Energieeffizienz der Anlage auf Maschinenebene zu optimieren, die Schnittqualität zu verbessern und den Werkzeugverschleiß zu reduzieren. Auch ist es möglich, die Fördergeschwindigkeit dynamisch zu berechnen und einzustellen und somit einen dynamischen Linienvorschub zu erreichen, mit dem die Bearbeitung der Baumstämme oder daraus erzeugter Werkstücke, insbesondere Model und/oder Kanthölzer, jeweils am individuellen Leistungsoptimum durchzuführen. Vorzugsweise kann die Aggregatsleistung und/oder Fördergeschwindigkeit des Baumstammes bei Bearbeitung durch mehrere Bearbeitungsmaschinen innerhalb einer Bearbeitungslinie individuell und bedarfsweise unterschiedlich eingestellt werden.

Eine bedarfsweise Verringerung der Vorschubgeschwindigkeit kann dazu führen, dass das Werkzeug bei einer gegebenen Aggregatsleistung die erforderliche Menge an Material abtragen kann und hierbei unsaubere Schnitte oder Oberflächenrisse vermieden werden können. Umgekehrt kann eine Erhöhung der Vorschubgeschwindigkeit vorteilhaft sein, um auf einen steigenden Materialwiderstand reagieren zu können, was die Standzeit der Werkzeuge verlängert und die Nutzung der Bearbeitungsmaschine effizienter macht. Zusätzlich können durch starre Vorschubgeschwindigkeit unregelmäßige Belastungen der Werkzeuge entstehen, insbesondere wenn Baumstämme mit unterschiedlichen Eigenschaften wie Holzart, Feuchte oder Dichte bearbeitet werden. Dies kann zu Überlastungen oder ineffizientem Energieverbrauch führen, da die Maschine immer auf eine Maximalleistung ausgelegt und in einem entsprechenden Leistungspunkt betrieben sein muss, selbst wenn dies nicht durchgehend benötigt wird. Infolgedessen erhöht sich nicht nur der Energieverbrauch, sondern auch der Verschleiß der Werkzeuge, da diese ungleichmäßig beansprucht werden. Eine Einstellung der Vorschubgeschwindigkeit ermöglicht es, diese Nachteile zu vermeiden.

Wird ein leistungsabhängiger Bearbeitungsparameter verändert, während die Vorschubgeschwindigkeit konstant bleibt, ergeben sich mehrere Vorteile für die Bearbeitung von Baumstämmen. Durch eine Erhöhung der Leistung kann das Werkzeug größere Schnittkräfte aufbringen, was eine effizientere Zerspanung ermöglicht. Dies führt zu einer gleichmäßigeren Bearbeitung, da das Werkzeug selbst bei härterem oder feuchtem Holz stets die erforderliche Materialabtragsrate erreicht, ohne an seine Leistungsgrenzen zu stoßen. Ein weiterer Vorteil der Erfindung liegt in der verbesserten Schnittqualität. Da die Aggregatleistung bedarfsweise erhöht werden kann, kann das Material sauberer getrennt werden, was zu präziseren Schnitten und glatteren Oberflächen führt. Gleichzeitig wird das Risiko von Rissen oder unsauberen Schnittbildern reduziert, da das Werkzeug nicht unter Last langsamer wird oder anfängt zu reißen, sondern mit konstanter Geschwindigkeit durch das Holz arbeitet. Dadurch entstehen geringere mechanische Belastungen auf das Schneidwerkzeug, was den Verschleiß reduziert und die Wartungsintervalle verlängert. Neben den genannten Merkmalen gilt es aus wirtschaftlicher Sicht die Bearbeitung der Baumstämme oder daraus erzeugter Werkstücke am Leistungsoptimium zu fahren, sodass die beschriebene Erfindung eine stammindividuelle Berechnung aller leistungsbezogener Merkmale beinhaltet und entsprechend die ideale Vorschubgeschwindigkeit bzw. Drehzahl an jedem einzelnen Bearbeitungsschritt berechnet und entsprechend ausgeführt wird.

Der leistungsabhängige Bearbeitungsparameter kann grundsätzlich als jeder Parameter angesehen werden, welcher mit der Aggregatsleistung der betreffenden Bearbeitungsmaschine und/oder entsprechendem Werkzeug zusammenhängt. Hierbei kann es sich um die Aggregatleistung selbst, ein Antriebsmoment und/oder Drehzahl des Werkzeugs oder damit mechanisch gekoppelten Antriebselementes handeln. Es liegt im Rahmen der Erfindung, dass der Bearbeitungsparameter verändert wird und die Fördergeschwindigkeit konstant bleibt oder umgekehrt. Es liegt auch im Rahmen der Erfindung, dass sowohl der Bearbeitungsparameter als auch die Fördergeschwindigkeit eingestellt werden.

Ferner liegt es im Rahmen der Erfindung, dass die Abmessung und/oder Geometrie des Baumstammes oder daraus erzeugten Werkstücks nur mittelbar für die individuelle Einstellung des leistungsabhängigen Bearbeitungsparameters und der Fördergeschwindigkeit berücksichtigt werden. Insbesondere ist denkbar, dass die erfasste Abmessung und/oder Geometrie zunächst zur Ermittlung einer Schnittlösung verwendet werden und die Einstellung des leistungsabhängigen Bearbeitungsparameters und der Fördergeschwindigkeit in Abhängigkeit der Schnittlösung erfolgt. Die Schnittlösung kann im Rahmen der Erfindung als eine Anordnung von zu gewinnenden Brettern in Bezug auf die Stammgeometrie oder des aus dem Baumstamm gewonnenen Werkstücks angesehen werden.

Die Ermittlung der Abmessung und/oder Geometrie kann anhand eines oder mehrerer Sensoren erfolgen, welche insbesondere als optische Sensoren ausgebildet sein können und eine zweidimensionale und/oder dreidimensionale Geometrieinformation über den Baumstamm oder des daraus gewonnenen Werkstücks ermitteln und ausgeben. Es liegt im Rahmen der Erfindung, dass eine Messvorrichtung ortsfest angeordnet ist und der Baumstamm bei seiner Förderbewegung einen Erfassungsbereich der Messvorrichtung passiert, in welcher die Abmessung und/oder Geometrie des Baumstammes erfasst wird, insbesondere in Gestalt einer Punktewolke, welche anschließend zu einem digitalen Stammmodell verarbeitet wird. Zusätzlich oder alternativ kann eine

In einer vorteilhaften Weiterbildung wird der Baumstamm oder das daraus erzeugtes Werkstück teilweise spanend zu Hackschnitzeln und/oder Spänen verarbeitet und der Schnittparameter und/oder die Fördergeschwindigkeit werden in Abhängigkeit einer nominellen Hackschnitzeleigenschaft bzw. Spaneigenschaft eingestellt.

Die vorstehend beschriebene Weiterbildung beruht auf der Erkenntnis, dass bei der Bearbeitung von Baumstämmen Hackschnitzel und/oder Späne anfallen, welche bei der Erzeugung von Holzbrettern lediglich zwar nur ein Beiprodukt darstellen, deren Weiterverkauf jedoch zu einer guten Wirtschaftlichkeit bei der Stammbearbeitung führen kann. Damit die besagten Hackschnitzel bzw. Späne mit einer hohen Materialausbeute weiterverwendet werden können, müssen diese regelmäßig vorgegebene Eigenschaften, insbesondere hinsichtlich Größe und/oder Form aufweisen. Es ist eine überraschende Erkenntnis, dass die für die Weiterverarbeitung erforderlichen Hackschnitzeleigenschaften bzw. Spaneigenschaften in Abhängigkeit der Vorschubgeschwindigkeit und/oder des leistungsabhängigen Bearbeitungsparameters erreicht werden können. Daher beruht die vorteilhafte Weiterbildung auf dem Umkehrschluss, dass zur Gewinnung von Hackschnitzeln bzw. Spänen mit einer vordefinierten nominellen Eigenschaft, die Vorschubgeschwindigkeit und der leistungsabhängige Bearbeitungsparameter eingestellt werden können. Es liegt im Rahmen der vorteilhaften Weiterbildung, dass es bei den tatsächlich erzeugten Hackschnitzeln bzw. Spänen bezüglich der betreffenden Hackschnitzeleigenschaft bzw. Spaneigenschaft eine natürliche Varianz gibt. Untersuchungen der Anmelderin haben jedoch gezeigt, dass die Weiterverwendbarkeit von Hackschnitzeln bzw. Spänen hinreichend sichergestellt werden kann, wenn die gewünschte Hackschnitzelgeometrie bzw. Spaneigenschaft mit einer nominellen Größe, beispielsweise einer durchschnittlichen Hackschnitzel- bzw. Spanform und/oder Hackschnitzel- bzw. Spangeometrie vorgegeben wird.

In einer einfachen Ausführungsform kann eine Hackschnitzeleigenschaft bzw. Spaneigenschaft, welche, wie oben angedeutet, eine Hackschnitzel- bzw. Spangröße oder Hackschnitzel- bzw. Spangeometrie sein kann, eine direkte Abhängigkeit zu dem leistungsabhängigen Bearbeitungsparameter, insbesondere dem Moment und/oder der Drehzahl eines rotierenden Werkzeugs der Bearbeitungsmaschine, und/oder der Fördergeschwindigkeit, mit der Baumstamm oder das daraus erzeugte Werkstück zur spanenden Bearbeitung durch die Bearbeitungsmaschine hindurchgefördert wird, bestehen. Dieser Zusammenhang kann experimentell oder rechnerisch ermittelt sein und die Grundlage für ein Modell bilden, welches den Zusammenhang repräsentiert. Insbesondere kann es sich bei dem Modell um ein rechnerisches Modell handeln oder ein Modell auf Basis einer künstlichen Intelligenz, welches einen Zusammenhang zwischen einer nominellen Hackschnitzeleigenschaft bzw. Spangröße und dem mindestens einen leistungsabhängigen Bearbeitungsparameter und/oder der Fördergeschwindigkeit des Baumstammes angibt. Die Einstellung des mindestens einen leistungsabhängigen Bearbeitungsparameters und/oder der Fördergeschwindigkeit des Baumstammes kann automatisiert erfolgen. Es ist auch denkbar, dass die Einstellung manuell erfolgt, indem ein Anlagenbediener anhand einer Tabelle oder vergleichbaren Grundlage ermittelt, welche leistungsabhängigen Bearbeitungsparameter und/oder Fördergeschwindigkeit des Baumstammes eingestellt werden müssen, um Hackschnitzel mit bestimmten Eigenschaften zu erhalten.

In einer vorteilhaften Weiterbildung werden der Bearbeitungsparameter und die Fördergeschwindigkeit der Bearbeitungsmaschine derart eingestellt, dass durch spanende Bearbeitung zweier Baumstämme unterschiedlicher Abmessungen Hackschnitzel mit im Wesentlichen einheitlichen nominellen Eigenschaften, insbesondere einer im Wesentlichen einheitlichen Hackschnitzelgröße und/oder im Wesentlichen einheitlichen Hackschnitzelgeometrie, erzeugt werden.

In einer vorteilhaften Weiterbildung sind die Bearbeitungsmaschinen innerhalb einer Anlage fördertechnisch miteinander verbunden und es werden innerhalb der Anlage unterschiedliche Fördergeschwindigkeiten in Abhängigkeit der Abmessung und/oder Geometrie des Baumstammes oder einer daraus abgeleiteten Größe eingestellt. Insbesondere werden für mindestens zwei Bearbeitungsmaschinen zur Bearbeitung ein und desselben Baumstamms oder daraus erzeugten Werkstücks unterschiedliche Fördergeschwindigkeiten und/oder leistungsbezogene Bearbeitungsparameter eingestellt, mit welchen der Baumstamm und/oder das daraus erzeugte Werkstück durch die Bearbeitungsmaschinen hindurchgefördert und dabei bearbeitet wird.

In einer vorteilhaften Weiterbildung werden die leistungsbezogenen Bearbeitungsparameter und/oder die Fördergeschwindigkeiten, mit welchen der Baumstamm und/oder das daraus erzeugte Werkstück durch die mindestens zwei Bearbeitungsmaschinen gefördert wird, in Abhängigkeit nomineller Aggregatleistungen und der jeweiligen Schnittflächen eingestellt.

Der Parameter Schnittfläche kann als die Fläche des abzutragenden Spans in einer bestimmten Schnittebene angesehen werden. Die Schnittfläche gibt an, wie viel Material das Werkzeug pro Schnitt durchdringt und ist eine wichtige Größe zur Bestimmung der Schnittkraft und der Bearbeitungsleistung. Insbesondere kann sich die Schnittfläche aus einer Schnittlösung ergeben, entsprechend derer der Baumstamm oder das daraus gewonnene Werkstück bearbeitet werden sollen. Im Rahmen der vorteilhaften Weiterbildung kann die Schnittfläche als eine von den Abmessungen und/oder Geometrie des Baumstammes oder daraus erzeugten Werkstückes abhängige Größe angesehen werden. Insbesondere hängt die Schnittfläche von der Geometrie des Werkzeugs der betreffenden Bearbeitungsmaschine ab.

In einer vorteilhaften Weiterbildung werden der leistungsabhängige Bearbeitungsparameter und/oder die Fördergeschwindigkeiten in Abhängigkeit der ermittelten Abmessung und/oder Geometrie ermittelt und individuell eingestellt, wobei während und/oder nach der Bearbeitung des Baumstammes oder daraus erzeugten Werkstücks ein Vergleich zwischen einer ermittelten Aggregatsleistung und der tatsächlich aufgenommenen Aggregatsleistung der Bearbeitungsmaschine durchgeführt wird.

Die vorstehend beschriebene Weiterbildung bildet die Grundlage für eine dynamische Optimierung bei der Bearbeitung von Baumstämmen, mittels derer verschiedene leistungsabhängige Bearbeitungsparameter, z. B. die Aggregatleistung selbst, und/oder Fördergeschwindigkeiten in Echtzeit angepasst werden können. Die Bearbeitungsmaschine kann ihre Leistungsaufnahme und Vorschubgeschwindigkeit dynamisch an den jeweiligen Baumstamm anpassen, anstatt mit festen Standardwerten zu arbeiten. Gleichzeitig wird überprüft, ob die tatsächlich verbrauchte Leistung mit den vorher berechneten Werten übereinstimmt, um mögliche Effizienzverluste frühzeitig zu erkennen. Dieses Verfahren sorgt für eine optimierte Bearbeitung, reduziert Kosten und verlängert die Lebensdauer der Werkzeuge.

Die Aggregatleistung, z. B. Motorleistung des Fräsers oder Sägeblatts, und die Vorschubgeschwindigkeit werden nicht fest eingestellt, sondern an die ermittelte Abmessung oder Geometrie des Baumstammes angepasst. Das bedeutet, dass jeder Baumstamm individuell bearbeitet wird, um die Effizienz zu maximieren. Beispielsweise erfordert ein dickerer Stamm oder ein besonders hartes Holz eine höhere Leistung, während bei dünneren Stämmen oder weicherem Holz weniger Energie benötigt wird.

Während oder nach der Bearbeitung wird die tatsächlich aufgenommene Leistung der Bearbeitungsmaschine mit der vorausberechneten Leistung vorzugsweise verglichen. Dies dient dazu, Abweichungen zu erkennen und das System ggf. nachzujustieren. Falls die Maschine mehr Leistung als erwartet verbraucht, könnte dies auf ein Problem wie Werkzeugverschleiß, eine fehlerhafte Einstellung oder eine unerwartete Materialhärte hinweisen.

Die Bestimmung der aufgenommenen Leistung einer Bearbeitungsmaschine kann in einfacher Weise durch die Messung einer elektrischen Leistung erfolgen, die der Maschine zugeführt wird. Dieser Wert gibt an, wie viel Energie die Maschine tatsächlich benötigt, um die Bearbeitung durchzuführen. Die Leistung kann dabei über verschiedene Methoden bestimmt werden, beispielsweise einer direkten elektrischen Leistungsmessung, bei der Stromsensoren den Stromfluss zum Motor messen und Spannungswerte über Spannungswandler erfasst werden, sodass aus dem Produkt der genannten Messgrößen auf die elektrische Leistung geschlossen werden kann. Ebenso kann die Leistungsberechnung durch Erfassung des Drehmoments und der Drehzahl am Motor und/oder unmittelbar am dem rotierenden Werkzeug erfolgen. Hierfür kann ein Drehmomentaufnehmer das Moment messen und die Drehzahl kann über einen Drehzahlsensor oder Encoder einer elektrischen Maschine erfasst werden. Ebenso können durch geeignete Ausgestaltung der Maschinensteuerung, etwa durch den Einsatz von Sensoren, die Grundlast der Maschine (Leerlaufleistung) und die Leistungsaufnahme während der Bearbeitung ermittelt werden. Eine Differenz der genannten Leistungen gibt den Energieerbrauch für den Spanabtrag an.

In einer vorteilhaften Weiterbildung erfolgt in Abhängigkeit einer Abweichung zwischen der ermittelten Antriebsleistung und der tatsächlich aufgenommenen Antriebsleistung eine Korrektur für den leistungsbezogenen Bearbeitungsparameter und/oder die Fördergeschwindigkeit. Die Korrektur kann während der Bearbeitung des Baumstammes erfolgen oder zur Bearbeitung eines weiteren, in der Bearbeitung nachfolgenden Baumstammes berücksichtigt werden.

In einer vorteilhaften Weiterbildung wird in Abhängigkeit einer Abweichung zwischen der ermittelten Aggregatsleistung und der tatsächlich aufgenommenen Aggregatsleistung ein Werkzeugverschleiß ermittelt und/oder vorhergesagt. Der Werkzeugverschleiß kann durch eine oder mehrere Kennzahlen repräsentiert sein, welche einen Zustand oder Zustandsveränderung des Werkzeugs infolge seiner Nutzung angeben. Es ist möglich, dass die Kennzahl eine verbleibende Lebensdauer oder Gesamtstandzeit des Werkzeugs angibt, welche zuvor experimentell oder rechnerisch ermittelt wurde. Es ist auch denkbar, dass die Bestimmung des Werkzeugverschleißes auf Basis eines Modells erfolgt, welches insbesondere auf Basis einer künstlichen Intelligenz beruhen kann oder analytisch erstellt sein kann.

Die Aufgabe wird auch gelöst durch eine Anlage zur Verarbeitung eines Baumstamms zu Schnittholz. Die Anlage umfasst mindestens eine, vorzugsweise mehrere Bearbeitungsmaschinen zur spanenden Bearbeitung des Baumstamms oder eines daraus erzeugten Werkstücks, wobei die mindestens eine Bearbeitungsmaschine einen einstellbaren leistungsabhängigen Bearbeitungsparameter, insbesondere ein Moment und/oder eine Drehzahl eines rotierenden Werkzeugs der Bearbeitungsmaschine, aufweist. Die Anlage umfasst außerdem ein Messmittel, welches zur Erfassung einer Abmessung und/oder Geometrie des Baumstammes ausgebildet ist. Die Anlage weist ferner ein Fördermittel auf, welches dazu vorgesehen ist, eine Relativbewegung zwischen dem Baumstamm oder daraus erzeugten Werkstück gegenüber mindestens einem Werkzeug der Bearbeitungsmaschine zur spanenden Bearbeitung zu erzeugen. Die Anlage weist außerdem eine Steuereinheit auf, welche signaltechnisch zumindest mit dem Messmittel, Fördermittel und der Bearbeitungsmaschine verbunden ist und dazu eingerichtet ist, zumindest den Bearbeitungsparameter der Bearbeitungsmaschine und/oder eine Geschwindigkeit der Relativbewegung in Abhängigkeit der ermittelten Abmessung und/oder Geometrie individuell einzustellen.

Vorzugsweise ist die Anlage zur Durchführung des erfindungsgemäßen Verfahrens oder einer vorteilhaften Weiterbildung davon geeignet. Dementsprechend sind die Ausführungen in Bezug auf das erfindungsgemäße Verfahren und seine vorteilhaften Weiterbildungen auf die Anlage übertragbar.

In einer vorteilhaften Weiterbildung ist zumindest eine der Bearbeitungsmaschinen ein Spaneraggregat ist, welches mindestens eine rotierbar gelagerte Messerkopfeinheit zur Erzeugung einer Breitseite eines Bretts an dem Baumstamm oder an dem daraus erzeugten Werkstück umfasst sowie mindestens eine damit verbundene Antriebseinheit, welche mit der Steuereinheit signaltechnisch verbunden ist.

In einer vorteilhaften Weiterbildung ist zumindest eine der Bearbeitungsmaschinen ein Profilieraggregat, welches mindestens einen rotierbar gelagerten Fräskopf zur Profilierung einer Schmalseite eines Bretts an dem Baumstamm oder daraus erzeugten Werkstücks umfasst sowie eine damit verbundene Antriebseinheit, welche mit der Steuereinheit signaltechnisch verbunden ist.

In einer vorteilhaften Weiterbildung ist zumindest eine der Bearbeitungsmaschinen ein Sägeaggregat, welches mindestens ein rotierbar gelagertes Sägeblatt zum Abtrennen eines oder mehrerer Bretter vom Baumstamm und/oder zum Ritzen eines oder mehrerer Bretter am Baumstamm umfasst, sowie mindestens eine damit verbundene Antriebseinheit, welche signaltechnisch mit der Steuereinheit verbunden ist. Ebenso kann das Sägeaggregat zum Besäumen eines bereits vom Baumstamm abgetrennten Bretts vorgesehen sein.

Vorzugsweise sind zumindest das Spaneraggregat und/oder das Profilieraggregat und/oder das Sägeaggregat mittels des Fördermittels fördertechnisch miteinander verbunden. Die Anlage ist dazu ausgestaltet, mehrere Baumstämme oder daraus erzeugte Werkstücke unterschiedlicher Abmessungen und/oder Geometrien aufzunehmen und mit unterschiedlichen Fördergeschwindigkeiten mittels des Spaneraggregats und/oder des Profilieraggregats und/oder des Sägeaggregats zu bearbeiten.

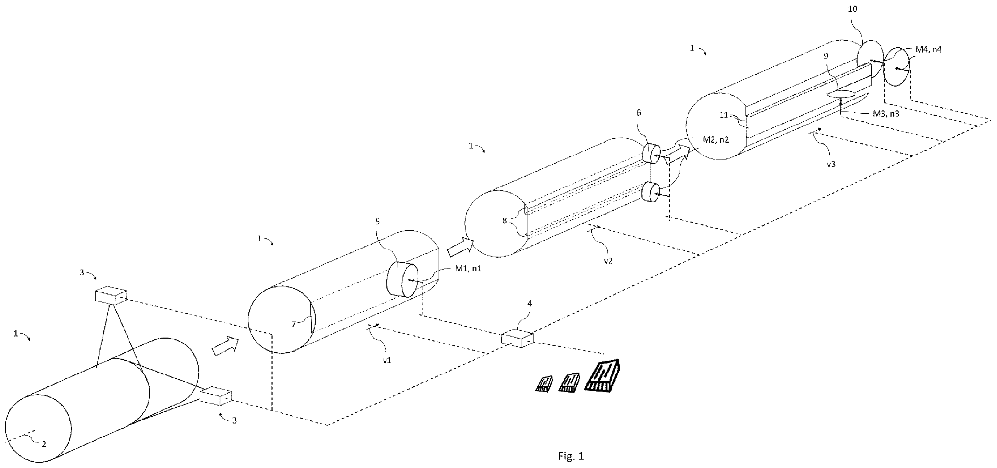

Eine denkbare Ausführungsform der Erfindung ist nachfolgend beispielhaft anhand von Figur 1 erläutert.

Figur 1 veranschaulicht eine spanende Bearbeitung eines Baumstammes 1, welcher zu Schnittholz verarbeitet werden soll. Dies umfasst die Gewinnung von Brettern und die Herstellung von Hackschnitzeln und Spänen.

Für die Bearbeitung wird der Baumstamm 1 zunächst entlang seiner Stammachse 2 zu einer Messvorrichtung 3 bewegt, welche in dem hier gezeigten Ausführungsbeispiel zwei Profilscanner umfasst, mittels derer der Baumstamm 1 messtechnisch erfasst wird und dabei seine Geometrie und Abmessungen ermittelt werden. Der Einfachheit halber weist der hier gezeigte Baumstamm 1 eine im Wesentlichen zylindrische Geometrie auf, kann tatsächlich jedoch unrund und mit einem gekrümmten Verlauf vorliegen, der durch den natürlichen Wuchs des Baumstammes bedingt ist.

Die mittels der Messvorrichtung 3 erfassten Informationen werden über eine Datenverbindung an eine Steuereinheit 4 ausgegeben. Die Steuereinheit 4 ist mit einer darauf implementierten Auswerteroutine dazu eingerichtet, zu ermitteln, wie viele und welche Arten von Brettern optimalerweise aus dem Baumstamm 1 gewonnen werden können und ermittelt hierfür eine sog. Schnittlösung, die die erreichbare Anordnung und die Abmessungen der Bretter in Bezug auf die Stammgeometrie umfasst und welche sich von Baumstamm zu Baumstamm unterscheidet.

Da die Ausrichtung der gewinnbaren Bretter gegenüber der Stammgeometrie während der messtechnischen Erfassung des Baumstammes 1 gegenüber einer horizontalen bzw. vertikalen Bezugsebene verdreht vorliegen kann, wird der Baumstamm 1 während der Förderbewegung üblicherweise um seine Stammachse 2 gedreht. Dadurch wird der Baumstamm 1 mit seinen zu gewinnenden Brettern in eine optimale Ausrichtung gegenüber den daraufhin eingesetzten Trennmitteln gebracht, bei denen es sich im vorliegenden Fall um einen rotierenden Spanerkopf 5 eines Spaneraggregates handelt, sowie um zwei rotierende Profilierköpfe 6 eines Profilieraggregates, eine Ritzsäge 9 und zwei Sägeblätter 10.

Damit der Baumstamm 1 mittels des Spanerkopfes 5 und der Profilierköpfe 6 in der gewünschten Art und Weise für eine maximale Holzausbeute bearbeitet werden kann, wird in Abhängigkeit einer Abmessung und Geometrie des Baumstammes 1, welche mit dem Messmittel 3 erfasst wird, u.a. ermittelt, welche Schnitttiefen und welche Schnittbreiten für den Spanerkopf 5 und die Profilierköpfe 6 eingestellt werden müssen. Hieraus ergibt sich für die Bearbeitung mittels des Spanerkopfes 5 eine erste Schnittfläche 7 und für darauf folgende Bearbeitung mittels der Profilierköpfe 6 eine zweite Schnittfläche 8. Bei den Schnittflächen 7 und 8 handelt es sich um diejenigen Flächen, in welchen der Spanerkopf 5 bzw. die Profilierköpfe 6 mit Blick in die Förderrichtung in einen trennenden Eingriff mit dem Baumstamm 1 gelangen.

Eine Besonderheit des in Figur 1 gezeigten Verfahrens und der dafür eingesetzten Anlage besteht darin, dass die Aggregatleistung des Spanaggregates und des Profilieraggregates in Abhängigkeit der Abmessung und Geometrie des Baumstammes 1 eingestellt werden, indem die Momente M1, M2, die Drehzahlen n1, n2 und die Fördergeschwindigkeiten v1, v2 bedarfsweise und individuell eingestellt werden. Dadurch ist es anhand der Stammgeometrie möglich, eine optimale Bearbeitung des Baumstammes 1 hinsichtlich der Schnittqualität zu erreichen und den Werkzeugverschleiß zu mindern.

Ein weiterer wichtiger Aspekt ist, dass die Einstellung der oben genannten leistungsbezogenen Bearbeitungsparameter nicht allein in Abhängigkeit der Abmessung und Geometrie des Baumstammes 1 eingestellt werden, sondern auch in Abhängigkeit einer nominellen Hackschnitzeleigenschaft, vorliegend einer gewünschten Hackschnitzelgröße.

Die Einstellung der leistungsbezogenen Bearbeitungsparameter beruht auf der Erkenntnis, dass die bei der trennenden Bearbeitung des Baumstamms 1 anfallenden Hackschnitzel Eigenschaften aufweisen können, die einen Einfluss auf ihre Weiterverarbeitbarkeit haben. Sofern Hackschnitzel beispielsweise für die Herstellung von Bauteilen verwendet werden sollen, ist es erforderlich sicherzustellen, dass diese die gewünschten Größen und Formen aufweisen, damit die gewünschte Qualität des Bauteils sichergestellt werden kann. Gleichzeitig ist erkannt worden, dass leistungsbezogene Bearbeitungsparameter eines Spaneraggregates oder eines Profilieraggregates und die Fördergeschwindigkeit des Baumstammes einen direkten Einfluss auf die Hackschnitzelgeometrie und Hackschnitzelgröße haben. Durch entsprechende Einstellung der Bearbeitungsparameter und Fördergeschwindigkeit ist es daher möglich, Hackschnitzel mit einer gewünschten Hackschnitzelgeometrie und Größe herzustellen. Dies ermöglicht eine wirtschaftliche Durchführung des Verfahrens und einen entsprechend wirtschaftlichen Betrieb der Anlage zur Durchführung des Verfahrens. Die geforderte Hackschnitzeleigenschaft wird hierfür in die Steuereinheit 4 eingegeben.

Die Erkenntnisse hinsichtlich des Zusammenhanges zwischen Hackschnitzeln bzw. deren Eigenschaften und dem leistungsbezogenen Bearbeitungsparameter und/oder der Fördergeschwindigkeit gelten für Späne bzw. deren Eigenschaften entsprechend. Dementsprechend wird der Baumstamm 1 nach seiner Profilierung zunächst mittels einer Ritzsäge 9 mit einem Ritzschnitt versehen, wodurch ein an der Stammseite profiliertes Brett unterteilt wird. Anschließend wird das derart unterteilte Brett mittels zweier Sägeblätter 10 vom Baumstamm 1 getrennt. Die leistungsbezogenen Bearbeitungsparameter in Form eines Ritzsägenmoments M3 und einer Ritzsägendrehzahl n3 werden ebenso wie das Sägeblattmoment M4 und die Sägeblattdrehzahl n4 individuell und in Abhängigkeit der Abmessung und/oder Geometrie des Baumstammes eingestellt sowie in Abhängigkeit der gewünschten Spangeometrie. Die Schnittfläche 11 ergibt sich in Abhängigkeit der Schnittiefe und Dicke der Sägeblätter und kann damit der Fläche entsprechen, in welcher das jeweilige Sägeblatt 9, 10 mit dem Baumstamm 1 in trennendem Eingriff steht und in Abhängigkeit der Geometrie des Baumstammes 1 ermittelt werden kann.

Ein weiterer relevanter Aspekt besteht darin, dass während oder nach der Bearbeitung des Baumstammes 1 oder daraus erzeugten Werkstücks ein Vergleich zwischen einer zuvor berechneten Aggregatsleistung, welche sich aus den leistungsbezogenen Bearbeitungsparametern ergibt, und einer tatsächlich aufgenommenen Aggregatleistung erfolgt.

Dies erfolgt in dem hier gezeigten Ausführungsbeispiel durch die Messung einer elektrischen Leistung, die derjenigen Maschine zugeführt wird, welche die Rotationsbewegung des Spanerkopfes 5 oder der Profilierköpfe 6 oder der Ritzsäge 9 oder der Sägeblätter 10 bewirkt. Dies erfolgt unter Einsatz jeweils eines Strom- und eines Spannungssensors, welche entsprechende Strom- bzw. Spannungsmesswerte ausgeben, anhand derer die tatsächliche Leistung bei der Bearbeitung des Baumstammes 1 oder daraus erzeugten Werkstücks bestimmt werden kann.

Alternativ kann die Leistungsberechnung durch Erfassung des Drehmoments und der Drehzahl am Motor und/oder unmittelbar am dem rotierenden Werkzeug 5 bzw. 6 bzw. 9 bzw. 10 erfolgen. Hierfür kann ein Drehmomentaufnehmer das Moment messen und die Drehzahl kann über einen Drehzahlsensor oder Encoder einer elektrischen Maschine erfasst werden.

Sofern eine Abweichung zwischen der ermittelten Aggregatsleistung und der tatsächlich aufgenommenen Aggregatsleistung vorliegt kann eine Korrektur für die Berechnung der leistungsbezogenen Bearbeitungsparameter erfolgen. Insgesamt ergibt sich dadurch ein selbstoptimierendes System, bei dem ein initialer Fehler bei der Bestimmung und Festlegung des leistungsbezogenen Bearbeitungsparameters oder Fördergeschwindigkeit sukzessive reduziert werden kann.

Darüber hinaus kann in Abhängigkeit einer Abweichung zwischen der ermittelten Aggregatsleistung und der tatsächlich aufgenommenen Aggregatsleistung ein Werkzeugverschleiß ermittelt oder vorhergesagt werden. Insbesondere kann sich dies in einer geschätzten Werkzeugstandzeit äußern oder einer verbleibenden Lebensdauer. Dadurch ist es möglich, Wartungsintervalle zu planen und Stillstandszeiten der Anlage so zu legen, dass diese eine nur geringfügige Auswirkung auf die Gesamtwirtschaftlichkeit haben.

Die zu Figur 1 beschriebenen Prinzipien können auch auf hier nicht gezeigte Anlagenkonfigurationen übertragen werden. Insbesondere ist es denkbar, dass kein Profilieraggregat zum Einsatz kommt und ein Brett ohne vorheriges Entfernen des Waldkantenbereichs vom Baumstamm 1 getrennt wird. Hierbei kann das Brett einer Besäumkreissäge zugeführt werden, mit der der verbliebene Waldkantenbereich vom Brett getrennt wird, wobei mindestens ein leistungsbezogener Parameter und/oder die Fördergeschwindigkeit in Abhängigkeit der Abmessung und/oder Geometrie des Baumstammes eingestellt werden.

## Patentansprüche

1. Verfahren zur Verarbeitung mindestens eines Baumstamms (1) zu Schnittholz, bei dem der Baumstamm (1) oder ein daraus erzeugtes Werkstück (1) mittels mindestens einer, insbesondere mehrerer Bearbeitungsmaschinen, spanend bearbeitet wird und dafür mittels mindestens eines Fördermittels eine Relativbewegung des Baumstamms (1) oder des daraus erzeugten Werkstücks (1) gegenüber mindestens einem Werkzeug der Bearbeitungsmaschine erzeugt wird, wobei
vor der spanenden Bearbeitung mindestens eine Abmessung und/oder Geometrie des Baumstammes (1) oder des daraus erzeugten Werkstücks ermittelt wird und
für mindestens eine der Bearbeitungsmaschinen zumindest ein leistungsabhängiger Bearbeitungsparameter, insbesondere ein Moment (M1, M2, M3, M4) und/oder eine Drehzahl (n1, n2, n3, n4) eines rotierenden Werkzeugs (5, 6) der Bearbeitungsmaschine, und/oder eine Geschwindigkeit (v1, v2, v3) der Relativbewegung in Abhängigkeit der ermittelten Abmessung und/oder Geometrie individuell und insbesondere automatisch eingestellt werden.

2. Verfahren nach Anspruch 1, bei dem
der Baumstamm oder das daraus erzeugte Werkstück mittels des Fördermittels mit einer Fördergeschwindigkeit (v1, v2, v3) in einer Förderrichtung durch die Bearbeitungsmaschine hindurchgefördert und dabei mittels des Werkzeugs spanend bearbeitet wird.

3. Verfahren nach einem der voranstehenden Ansprüche, bei dem
der Baumstamm (1) oder das daraus erzeugte Werkstück (1) teilweise spanend zu Hackschnitzeln und/oder Spänen verarbeitet werden und der Bearbeitungsparameter (M1, M2, M3, M4, n1, n2, n3, n4) und/oder die Geschwindigkeit der Relativbewegung, insbesondere die Fördergeschwindigkeit (v1, v2, v3), in Abhängigkeit einer nominellen Hackschnitzeleigenschaft und/oder Spaneigenschaft eingestellt werden.

4. Verfahren zumindest nach den Ansprüchen 2 und 3, bei dem
der Bearbeitungsparameter (M1, M2, M3, M4, n1, n2, n3, n4) und die Fördergeschwindigkeit (v1, v2, v3) der Bearbeitungsmaschine derart eingestellt werden, dass durch spanende Bearbeitung zweier Baumstämme unterschiedlicher Abmessungen Hackschnitzel und/oder Späne jeweils mit im Wesentlichen einheitlichen nominellen Eigenschaften, insbesondere einer im Wesentlichen einheitlichen Hackschnitzelgröße und/oder Spangröße und/oder im Wesentlichen einheitlichen Hackschnitzelgeometrie und/oder Spangeometrie, erzeugt werden.

5. Verfahren nach Anspruch 1, bei dem
mindestens zwei Bearbeitungsmaschinen innerhalb einer Anlage fördertechnisch miteinander verbunden sind und in Abhängigkeit der Abmessung und/oder Geometrie innerhalb der Anlage unterschiedliche Geschwindigkeiten, insbesondere Fördergeschwindigkeiten (v1, v2, v3) des Baumstamms oder daraus erzeugten Werkstück, eingestellt werden, mit welchen der Baumstamm (1) und/oder das daraus erzeugte Werkstück (1) durch die Bearbeitungsmaschinen insbesondere mit variablen Geschwindigkeiten hindurchgefördert und spanend bearbeitet wird.

6. Verfahren nach einem der voranstehenden Ansprüche, bei dem
für mindestens zwei Bearbeitungsmaschinen zur Bearbeitung ein und desselben Baumstamms oder daraus erzeugten Werkstücks unterschiedliche Geschwindigkeiten, insbesondere Fördergeschwindigkeiten (v1, v2, v3) eingestellt werden, mit welchen der Baumstamm (1) und/oder das daraus erzeugte Werkstück (1) durch die Bearbeitungsmaschinen hindurchgefördert und spanend bearbeitet wird.

7. Verfahren nach Anspruch 5, bei dem
die leistungsabhängigen Bearbeitungsparameter (M1, M2, M3, M4, n1, n2, n3, n4) und/oder die Geschwindigkeiten, insbesondere Fördergeschwindigkeiten (v1, v2, v3), mit welchen der Baumstamm (1) und/oder das daraus erzeugte Werkstück (1) durch die mindestens zwei Bearbeitungsmaschinen gefördert wird, in Abhängigkeit nomineller Aggregatleistungen und/oder der jeweiligen Schnittflächen (7, 8) eingestellt werden.

8. Verfahren nach einem der voranstehenden Ansprüche, bei dem
der leistungsabhängige Bearbeitungsparameter (M1, M2, M3, M4, n1, n2, n3, n4) und/oder die Geschwindigkeiten, insbesondere die Fördergeschwindigkeiten (v1, v2, v3), in Abhängigkeit der ermittelten Abmessung und/oder Geometrie ermittelt und individuell eingestellt werden, wobei während oder nach der Bearbeitung des Baumstammes oder daraus erzeugten Werkstücks ein Vergleich zwischen einer ermittelten Aggregatsleistung und der tatsächlich aufgenommenen Aggregatsleistung der Bearbeitungsmaschine durchgeführt wird.

9. Verfahren nach Anspruch 8, bei dem
in Abhängigkeit einer Abweichung zwischen der ermittelten Aggregatsleistung und der tatsächlich aufgenommenen Aggregatsleistung eine Korrektur für den leistungsbezogenen Bearbeitungsparameter (M1, M2, M3, M4, n1, n2, n3, n4) und/oder die Geschwindigkeit, insbesondere Fördergeschwindigkeit (v1, v2, v3), erfolgt.

10. Verfahren nach Anspruch 8 oder 9, bei dem
in Abhängigkeit einer Abweichung zwischen der ermittelten Aggregatsleistung und der tatsächlich aufgenommenen Aggregatsleistung ein Werkzeugverschleiß ermittelt und/oder vorhergesagt wird.

11. Anlage zur Verarbeitung eines Baumstamms (1) zu Schnittholz, insbesondere mittels eines Verfahrens nach einem der Ansprüche 1 bis 10, mit
einem Messmittel (3), welches zur Erfassung einer Abmessung und/oder Geometrie des Baumstammes (1) ausgebildet ist, sowie mit
mindestens einer, vorzugsweise mehrerer Bearbeitungsmaschinen zur spanenden Bearbeitung des Baumstamms (1) oder eines daraus erzeugten Werkstücks (1), wobei die mindestens eine Bearbeitungsmaschine einen einstellbaren Bearbeitungsparameter (M1, M2, M3, M4, n1, n2, n3, n4), insbesondere ein Moment (M1, M2, M3, M4) und/oder eine Drehzahl (n1, n2, n3, n4) eines rotierenden Werkzeugs der Bearbeitungsmaschine, aufweist, sowie mit
einem Fördermittel, welches dazu vorgesehen ist, eine Relativbewegung zwischen dem Baumstamm (1) oder das daraus erzeugten Werkstück (1) gegenüber mindestens einem Werkzeug der Bearbeitungsmaschine zur spanenden Bearbeitung zu erzeugen, sowie
mit einer Steuereinheit (4), welche signaltechnisch zumindest mit dem Messmittel (3), dem Fördermittel und der Bearbeitungsmaschine verbunden ist und dazu eingerichtet ist, zumindest einen Bearbeitungsparameter (M1, M2, M3, M4, n1, n2, n3, n4) der Bearbeitungsmaschine und/oder eine Geschwindigkeit der Relativbewegung (v1, v2, v3) in Abhängigkeit der ermittelten Abmessung und/oder Geometrie individuell einzustellen.

12. Anlage nach Anspruch 11 bei der
zumindest eine der Bearbeitungsmaschinen ein Spaneraggregat ist, welches mindestens einen rotierbar gelagerte Spanerkopf (5) zur Erzeugung einer Breitseite eines Bretts an dem Baumstamm oder an dem daraus erzeugten Werkstück umfasst sowie mindestens eine damit verbundene Antriebseinheit, welche mit der Steuereinheit (4) signaltechnisch verbunden ist.

13. Anlage nach zumindest einem der Ansprüche 11 oder 12, bei der
zumindest eine der Bearbeitungsmaschinen ein Profilieraggregat ist, welches mindestens einen rotierbar gelagerten Profilierkopf (6) zur Profilierung einer Schmalseite eines Bretts an dem Baumstamm oder daraus erzeugten Werkstücks umfasst sowie eine damit verbundene Antriebseinheit, welche mit der Steuereinheit (4) signaltechnisch verbunden ist.

14. Anlage nach zumindest einem der Ansprüche 11 bis 13, bei der
zumindest eine der Bearbeitungsmaschinen ein Sägeaggregat ist, welches mindestens ein rotierbar gelagertes Sägeblatt (9, 10) zum Abtrennen oder Ritzen oder Besäumen eines oder mehrerer Bretter umfasst, sowie mindestens eine damit verbundene Antriebseinheit welche mit der Steuereinheit (4) signaltechnisch verbunden ist.

15. Anlage nach den Ansprüchen 12 bis 14, bei der
zumindest das Spaneraggregat und/oder das Profilieraggregat und/oder das Sägeaggregat mittels des Fördermittels miteinander fördertechnisch verbunden sind und die Anlage dazu ausgestaltet ist, mehrere Baumstämme oder daraus erzeugte Werkstücke unterschiedlicher Abmessungen und/oder Geometrien aufzunehmen und mit unterschiedlichen Geschwindigkeiten und/oder Bearbeitungsparametern mittels des Spaneraggregats und/oder des Profilieraggregats und/oder des Sägeaggregats zu bearbeiten.
